# EUROPEAN PATENT APPLICATION

(11) **EP 4 807 648 A1**
(43) Date of publication of application: **16.09.2026**
(21) Application number: 25397503.1
(22) Date of filing: 10.03.2025
(51) Int. Cl.: G06Q 20/04, G06Q 20/20

(54) **METHOD AND SYSTEM FOR PROVIDING ITEMIZED CARD EVENT INFORMATION TO A USER**

(71) Applicant: Netcetera AG, 8004 Zurich (CH)
(72) Inventor: Lilja, Viliina, 00180 Helsinki (FI); Mononen, Tero, 00180 Helsinki (FI)
(74) Representative: LKGLOBAL Partnerschaftsgesellschaft mbB

(57) **Abstract**

The invention relates to a system (1) for providing itemized card event information (2) to a user (10). The system (1) comprises a server entity (40) that receives a first itemized card event information (2a) which is associated to a first card-based transaction process executed via a first card transaction entity (31) based on a card (20) of the user (10). The server entity (40) receives an address information (3) which is associated to the card (20) of the user (10) and indicates a storage address of the server entity (40). The server entity (40) stores the first itemized card event information (2a) using the storage address and provides the first itemized card event information (2a) to the user (10) of the card (20). The invention also relates to a method for providing itemized card event information (2) to a user.

## Description

The present invention generally relates to the provision of receipt information for card-based transaction processes. In particular, the invention relates to a system for providing itemized card event information to a user and a method for providing itemized card event information to a user.

Payment cards like credit cards or debit cards are widely used for the purchase of goods and services. In particular, these payment cards may be used as physical cards or as virtual cards. For example, physical cards in the form of card-like data carriers may be used by physically presenting them to a card reader, e.g., at point-of-sale terminal, where a communication link between the card and the card reader is established to carry out the card-based transaction process. Physical cards may also be used for online payment processes after the physical card has been registered with an application which for instance is executed on a mobile device, e.g., a mobile phone, of the user. A virtual payment card is a digital version of a physical debit or credit card and is typically used for online transactions. In either case, a payment terminal or an online platform where the card-based transaction process is carried out may provide information about the specific card-based transaction process, e.g., on a receipt. In particular, such a receipt may be printed directly at the payment terminal or may be sent to the user via an e-mail, for example. However, the receipt only indicates some of the information of the card-based transaction process and the user might not be aware of all information associated to the card-based transaction process. In addition, different card-based transaction processes using different payment terminals or different online platforms deliver the receipts in various distinct forms such that the user of the card might lose the overview of all the card-based transaction processes being performed with a specific card.

It may be seen as an object of the invention to improve the provision of card event information to a user.

A system and a method according to the features of the independent claims are provided. Further embodiments of the invention are evident from the dependent claims, the Figures and the following description.

According to an aspect of the invention, a system for providing itemized card event information to a user is provided. The system comprises a server entity configured to receive a first itemized card event information from a first card transaction entity, the first itemized card event information being associated to a first card-based transaction process executed via the first card transaction entity based on a card of the user. The server entity is further configured to receive an address information from the first card transaction entity, the address information being associated to the card of the user and indicating a storage address of the server entity. The server entity is further configured to store the first itemized card event information using the storage address indicated by the address information. The server entity is further configured to provide the first itemized card event information to the user of the card, in particular to a mobile device of the user.

The inventive system may allow maintaining itemized card event information in a centralized manner, i.e., at the server entity from where the collected itemized card event information may be provided to the user of the card. In particular, if the user uses a physical or virtual card for a card-based transaction process at the card transaction entity, the corresponding card event in-formation of that card-based transaction process may be forwarded to the server entity in an itemized form. This means that all data related to the card-based transaction process at the card transaction entity may be delivered to the server entity and collected by the server entity. Preferably, a plurality of itemized card event information from different card-based transaction processes and/or from different card transaction entities may be forwarded to the server entity where all the itemized card event information may be collected and stored for the particular card that was used for the different card-based transaction processes. In this manner, the server entity may centrally store all itemized card event information, e.g., receipt information, associated to the card-based transaction processes in which the same card of the user has been used such that the itemized card event information may be provided to the user, for example to a mobile device like a mobile phone of the user. This improves the awareness of the user about the specifics and the content of each card-based transaction process in which the card of the user has been used.

The term "itemized" in the context of itemized card event information may be understood in that the card event information may be collected in a form where all positions of a card-based transaction process, for example a purchase, are listed. In particular, the itemized card event in-formation does not only contain the payment amount, but also specifies other details like the place or location of the card-based transaction process, the time of the day of the card-based transaction process, the particulars of the card transaction entity, e.g., of the merchant, etc. Further examples of itemized card event information will be described in more detail below.

The first itemized card event information may be generated when the first card-based transaction process, for example a card-based payment process for purchasing a good and/or a service, is carried out based on the card of the user at the first card transaction entity. The first card transaction entity may be a payment terminal or an online payment platform where the first card-based transaction process is carried out. The first itemized card event information may include a detailed list of the specifics of said first card-based transaction process.

In addition to receiving the first itemized card event information, the server entity is further configured to receive the address information from the first card transaction entity. The address information may be stored on the card or on a digital token of the card which is used for the card-based transaction process and may be provided from the card to the first card transaction entity during the card-based transaction process. The address information may provide a unique identifier indicating a storage address in the server entity where all itemized card event information from said card or from the digital token of said card may be stored. In particular, this ensures that all itemized card event information for a single card may be centrally stored at the server entity such that all itemized card event information may then be selectively forwarded to the user of the card.

In particular, the server entity is further configured to transmit the first itemized card event in-formation to the user of the card. For this purpose, the user may retrieve the first itemized card event information from the storage address of the server entity, either actively or passively. This means that the user may request the first itemized card event information to be transmitted to the user or the server entity may transmit the first itemized card event information to the user at a predetermined time or immediately when the first card-based transaction process has been carried out. In this manner, all itemized card event information that has been received from different card transaction entities and that has been centrally stored in the storage address of the server entity may be provided to the user.

The server entity may provide a server application programming interface (API) configured to provide the first itemized card event information. In this manner, the server entity may provide itemized receipts of all purchases done with the same card. It is possible that the server entity issues a notification to the user indicating that the first itemized card event information was transmitted to the user such that the user may be notified that the first itemized card event in-formation has been received, for example at a mobile device of the user.

According to an embodiment, the first itemized card event information comprises a first itemized receipt information for a good purchased via the first card transaction entity and/or a first itemized receipt information for a service purchased via the first card transaction entity.

The first itemized receipt information may include a list of all data and information that is related to the purchase at the first transaction entity. The first itemized receipt information may include different positions of the purchase, for example a list of different products purchased or a type of the products purchased. In this way, a more informative collection of data is possible, wherein this data is centrally and safely stored at the server entity from where the user can be informed of said data. For example, when the purchase is carried out at a physical point-of-sale terminal, it is not required to print a receipt for the purchase since the receipt information may be stored at the server entity from where the data of the purchase can be received by the user. In other words, the inventive system enables receiving receipts for all card purchases in one place and offers a centralized and intuitive receipt service regardless of the merchant, which improves the awareness of the user about transaction processes in which the card of the user has been used.

According to an embodiment, the first itemized card event information comprises at least one of a time of an item purchased, a quantity of items purchased, an amount of an item purchased, a unit price of an item purchased, total costs of an item purchased, taxes paid for an item purchased, a total amount of an item purchased, or a warranty information for an item purchased.

Further information may be provided with the first itemized card event information. Second, third and further itemized card event information, for example from different card transaction entities, may also contain the above-mentioned information and may be centrally stored in the storage address of the server entity. In this manner, the central storage of these information in the storage address of the server entity allows to store all details of card-based transaction processes where the same card of the user has been used.

This procedure may be extended to further cards of the same user, wherein in case of further cards, the storage address in the server entity may be the same as used for the first card, or the storage address in the server entity may be different from the storage address as used for first card.

According to an embodiment, the server entity is configured to receive a user selection information from the user of the card, the user selection information indicating a modality for providing the first itemized card event information to the user and/or indicating a selected content of the first itemized card event information provided by the server entity to the user of the card.

In particular, the user may initially set up a list of information that is to be forwarded from the server entity to the user. Furthermore, the user may initially set up, which and/or when the in-formation is presented to the user. Furthermore, the user may initially set up a form in which the information is presented to the user. For example, the user may choose to receive the content of the first itemized card event information via an e-mail address of the user or via an application, e.g., via a banking app, executed on a mobile device of the user. In other words, the user can opt in or out for receiving receipts and choose whether to receive the receipts in an e-mail or mobile phone (banking) app. The set up may be stored at the server entity such that the server entity only forwards the itemized card event information which the user wants to receive.

According to an embodiment, the address information comprises at least one of an e-mail address or a Uniform Resource Locator (URL) address.

The address information may indicate the storage address in the server entity in which all itemized card event information that is based on a card-transaction process using the card of the user will be stored. In this manner, all itemized card event information related to the usage of a single card of the user may be centrally stored in the server entity from where the itemized card event information may be forwarded to the user.

According to an embodiment, the system further comprises the above-described first card transaction entity, wherein the first card transaction entity comprises a point-of-sale terminal and/or an online transaction platform.

This means that the first card-based transaction process may involve a physical payment process, e.g., via the point-of-sale terminal, and/or an online payment process via the online transaction platform. In ether case, the first itemized card event information may be generated and transmitted to the server entity for storage and collection at the respective storage address in the first server entity from where the first itemized card event information, and possibly any further itemized card event information, may be forwarded to the user.

According to an embodiment, the first card transaction entity is configured to execute the first card-based transaction process before receiving the address information from the card of the user. Additionally or alternatively, the first card transaction entity is configured to execute the first card-based transaction process in a first step and to receive the address information in a second step such that the first step and the second step are executed separately at the first card transaction entity.

In particular, the user may actively initiate the delivery of the address information from the card to the first card transaction entity. This may be provided by configuring the first card transaction entity in a manner that it receives, e.g., reads, the address information from the card if the card is presented to the first card transaction entity for a second time. For example, if a card-based transaction, e.g., a purchase, is carried out via a point-of-sale terminal, a software configuration at the point-of-sale terminal is provided so that the user may tap with the card to the point-of-sale terminal for a first time to carry out the purchase, and then for a second time to allow the itemized card event information to be transmitted to the server entity.

According to an embodiment, the system further comprises the above-described card of the user, wherein the card of the user comprises an applet configured to provide the address information.

This means that the address information that is used to store the first itemized card event information or any further itemized card event information at the server entity may be stored in the card applet and may be provided upon request to the respective card transaction entity from where it is transmitted to the server entity for indicating the storage address in the server entity where the first itemized card event information or any further itemized card event information is stored.

As indicated above, the card of the user may be a physical card or a virtual card. Furthermore, the card may be a tokenized card. Before using the card, the user may connect the card, e.g., a payment card like a debit or credit card, with an application, e.g., a wallet application, stored on a user device. The user device may be a mobile phone, a smartwatch, a head-mounted device or another portable mobile device on which the application can be stored. If the card which is to be connected with, e.g., added to, the application of the user device is a physical card, it may be connected to the application by holding a chip of the card close to the user device on which the application is stored and/or by performing the required steps for registering the card with the application. If the card is a virtual card, it may also be connected with, e.g., added to, the appli-cation by performing the required registering steps, for example by inputting card details into the user device.

According to an embodiment, the server entity is configured to receive a second itemized card event information from a second card transaction entity, the second itemized card event information being associated to a second card-based transaction process executed via the second card transaction entity based on the card of the user, wherein the server entity is further configured to receive the address information from the second card transaction entity, the address in-formation being associated to the card of the user and indicating the storage address of the server entity, wherein the server entity is further configured to store the second itemized card event information using the storage address indicated by the address information, wherein the server entity is further configured to provide the second itemized card event information to the user of the card.

The above-described features and functionalities of the first itemized card event information may analogously apply to the features and functionalities of the second itemized card event information. Similarly, the above-described features and functionalities of the first card transaction entity may analogously apply to the features and functionalities of the second card transaction entity. Similarly, the above-described features and functionalities of the first card-based transaction process may analogously apply to the features and functionalities of the second card-based transaction process.

In the same way, a plurality of itemized card event information may be collected and stored in the same storage address of the server entity. In other words, the card of the user includes the address information indicating the storage address in the server entity such that all itemized card event information that is obtained with said card at respective card transaction entities may be centrally stored in the storage address of the sever entity from where it can be provided to the user, in particular to a mobile device of the user.

According to an aspect, a method for providing itemized card event information to a user is provided. A step of the method comprises receiving, at a server entity, a first itemized card event information from a first card transaction entity, the first itemized card event information being associated to a first card-based transaction process executed via the first card transaction entity based on a card of a user. Another step of the method comprises receiving, at the server entity, an address information from the first card transaction entity, the address information being associated to the card of the user and indicating a storage address of the server entity. Another step of the method comprises storing, at the server entity, the first itemized card event in-formation using the storage address indicated by the address information. Another step of the method comprises providing, by the server entity, the first itemized card event information to the user of the card, in particular to a mobile device of the user. The method steps may be performed in the indicated order.

The components, features and characteristics described with respect to the inventive system for providing itemized card event information to a user also apply to the components, features and functionalities of the inventive method.

Exemplary embodiments of the invention are explained in more detail below with reference to schematic drawings.
- Fig. 1: shows a system for providing itemized card event information to a user.
- Fig. 2: shows a flow diagram of a method for providing itemized card event information to a user.

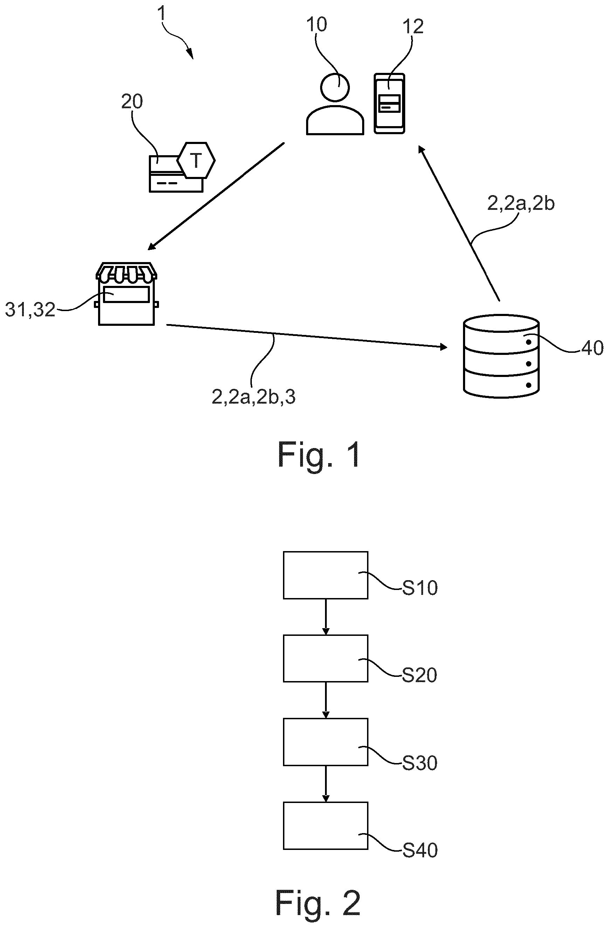

Fig. 1 shows a system 1 for providing itemized card event information 2, 2a, 2b to a user 10. The system 1 comprises a card 20, a first card transaction entity 31 and a sever entity 40. The card 20 may be a physical card or a virtual card of the user 10. In particular, the card 20 may be a payment card which the user 10 may use to carry out a payment process at the first card transaction entity 31. The first card transaction entity 31 may comprise a first point-of-sale terminal 31 and/or a first online transaction platform 31. In the following, the system 1 will be described with respect to a physical point-of-sale terminal 31, although the system 1 may also be realized if the first card transaction entity 31 is present in the form of an online transaction platform 31.

If the user 10 uses the card 20 to carry out a card-based transaction process, e.g., a payment process, via the first point-of-sale terminal 31, the user may present the card 20 or a mobile device 12 of the user 10 on which the card details are stored, to the first point-of-sale terminal 31. This initiates the first card-based transaction process in which card data is read from the card 20 by a card reader of the first point-of-sale terminal 31.

The card 20 of the user 10 may comprise an application or applet. The application or applet may be configured to provide or may be personalized with an address information 3 which indicates a storage address of the server entity 40 where first itemized card event information of the first card-based transaction process is to be stored. In particular, the server entity 40 is configured to receive the first itemized card event information 2a from the first point-of-sale terminal 31, wherein the first itemized card event information 2a is associated to a first card-based transaction process executed via the first point-of-sale terminal 31 based on the card 20 of the user 10.

In an example, the first point-of-sale terminal 31 is configured to execute the first card-based transaction process before receiving the address information 3 from the card 20 of the user 10. In particular, the point-of-sale terminal 31 is configured to execute the first card-based transaction process in a first step and to receive the address information 3 from the card 20 in a second step, wherein the first step and the second step are executed separately. For example, if the first card-based transaction process, e.g., a purchase, is carried out via the first point-of-sale terminal 31, a software configuration of the first point-of-sale terminal 31 may be configured so that the user 10 may tap with the card 20 to the first point-of-sale terminal 31 for a second time in order to allow the first itemized card event information to be transmitted to the server entity 40.

The server entity 40 is further configured to receive the address information 3 from the first point-of-sale terminal 31, wherein, as described above, the address information 3 is associated to the card 20 of the user 10 and indicates the storage address of the server entity 40 where the first itemized card event information 2a is to be stored. The server entity 40 is then configured to provide the first itemized card event information 2a to the user 10 of the card 20. For example, the server entity 40 may transmit the first itemized card event information 2a to the user device 12, e.g., a mobile device 12 of the user 10.

In the same way, second itemized card event information 2b may be generated at a second card transaction entity 32, e.g., at a second point-of-sale terminal 32 which may be different from the first point-of-sale terminal 31.

If the user 10 uses the card 20 to carry out a second card-based transaction process, e.g., a payment process, via the second point-of-sale terminal 32, the user may present the card 20 or a mobile device 12 of the user 10 on which the card details are stored, to the second point-of-sale terminal 32. This initiates the second card-based transaction process in which card data is read from the card 20 by a card reader of the second point-of-sale terminal 32. Also the second point-of-sale terminal 32 may be configured to execute the second card-based transaction process before receiving the above-mentioned address information 3 from the card 20 of the user 10. In particular, the second point-of-sale terminal 32 is configured to execute the second card-based transaction process in a first step and to receive the address information 3 in a second step such that the first step and the second step are executed separately. For example, if the second card-based transaction process, e.g., a purchase, is carried out via the second point-of-sale terminal 32, a software configuration at the second point-of-sale terminal 32 may be configured so that the user 10 may tap with the card 20 to the second point-of-sale terminal 32 for a second time in order to allow the second itemized card event information 2b to be transmitted to the server entity 40. The server entity 40 is configured to receive the address information 3 from the second point-of-sale terminal 32, wherein the address information 3 is associated to the card 20 of the user 10 and indicates the storage address of the server entity 40 where the second itemized card event information 2b is to be stored. The server entity 40 is then configured to provide the second itemized card event information 2b to the user 10 of the card 20. For example, the server entity 40 may transmit the second itemized card event information 2b to the user device 12, e.g., the mobile device 12 of the user 10.

In the same way, further itemized card event information 2 may be generated at any (same or different) card transaction entities such that all this further itemized card event information 2 may be centrally stored in the same storage address of the server entity 40 from where it can be provided to the user 10.

The itemized card event information 2, 2a, 2b may comprise itemized receipt information for a good purchased via the respective card transaction entity 31, 32 and/or a itemized receipt information for a service purchased via the respective card transaction entity 31, 32. In particular, the itemized card event information 2, 2a, 2b may comprise at least one of a time of an item purchased, a quantity of items purchased, an amount of an item purchased, a unit price of an item purchased, total costs of an item purchased, taxes paid for an item purchased, a total amount of an item purchased, or a warranty in-formation for an item purchased.

In general, at any physical point-of-sale terminal like the point-of-sale terminals 31, 32, the following interactions may occur:
The card holder 10 (user 10) allows establishing a communication link between the card 20 and the point-of-sale terminal 31, 32 by presenting the card 20 close to the terminal 31, 32. The same applies for a virtual card 20 which is used similarly by presenting the mobile device on which the virtual card 20 is registered close to the terminal 31, 32. This means that the card holder 10 taps with NFC (Near Field Communication) at the point-of-sale terminal 31, 32 in order to pay with his/her selected card 20 or digital token. In particular, the card holder 10 may tap on the point-of-sale terminal 31, 32 for a first time to initiate the card-based transaction process, e.g., payment process.

A software of the point-of-sale terminal 31, 32 may be configured to enable a functionality to print a receipt or to deliver a digital receipt, wherein the above-described itemized card event information 2, 2a, 2b may be comprised by the receipt. In case of a digital receipt, the card holder 10 may tap on the point-of-sale terminal 31, 32 for a second time and thus receives a receipt on a digital account that he/she has configured for this purpose. The digital account may be maintained by the server entity 40 and may for instance be referenced by the storage address of the above-described address information 3.

The physical card 20 or digital token may include an applet that is personalized with the address information 3, for example in the form of a URL address or an email address. The URL address or e-mail address may point to a storage place provided by the server entity 40, e.g., a server entity 40 of a bank or any other service provider.

The software of the point-of-sale terminal 31, 32 may activate the NFC interface in case the user 10 wishes to receive the itemized card event information 2, 2a, 2b in the form of a digital receipt. The software of the point-of-sale terminal 31, 32 may then select an Application Identifier (AID) of the applet comprised by the card 20 or the digital token. The software of the point-of-sale terminal 31, 32 may then read an identifier, e.g., an International Bank Account Number (IBAN) and/or the last 4 digits of a Primary Account Number (PAN) and/or a digital signature from the applet comprised by the card 20 or the digital token. The software of the point-of-sale terminal 31, 32 may then read the URL/e-mail address from the applet and may request a backend of the point-of-sale terminal 31, 32 to provide the itemized card event information 2, 2a, 2b in the form of a digital itemized receipt, for example as a Java Script Object Notation (JSON) message, to the URL/e-mail address. The URL/e-mail address may be part of the address information 3 and may indicate the storage space in the server entity 40 where the itemized card event information 2, 2a, 2b is stored for retrieval by the user 10.

At the same time, the card holder 10 may tap on the point-of-sale terminal 31, 32 with the physical card 20 or with the mobile device 12 on which the card 20 is registered with an application. The physical card 20 or the registered card 20 on the mobile device 12 may answer to the point-of-sale terminal 31, 32 after the selection of the applet. In particular, the physical card 20 or the registered card 20 on the mobile device 12 may answer to the first read record with an identifier with digital signature and may answer to the second read record with the URL or email address. In this manner, the point-of-sale terminal 31, 32 may carry out the card-based transaction process and may also receive the required address information 3 of the storage place in the server entity 40.

The server entity 40, which may herein also be referred to as receipt storage device 40, may include a channel, e.g., an internet page, for user registration. The server entity 40 may further include a URL that allows for the itemized card event information 2, 2a, 2b, in particular correspondingly signed JSON messages, to be received and stored. The server entity 40 may further include a channel, e.g., an internet page, for authenticated users to retrieve the itemized card event information 2, 2a, 2b and to maintain any records in connection with the card holder 20 and/or in connection with retrieving the itemized card event information 2, 2a, 2b from the server entity 40. The server entity 40 may be configured to store the itemized card event information 2, 2a, 2b for a maximum storage time.

Fig. 2 shows a flow diagram of a method for providing itemized card event information 2, 2a, 2b to a user 10. The method may be performed by the system 1 as described with respect to Fig. 1 above.

A step S10 of the method comprises receiving, at a server entity 40, a first itemized card event information 2a from a first card transaction entity 31, the first itemized card event information 2a being associated to a first card-based transaction process executed via the first card transaction entity 31 based on a card 20 of a user 10. Another step S20 of the method comprises receiving, at the server entity 40, an address information 3 from the first card transaction entity 31, the address information 3 being associated to the card 20 of the user 10 and indicating a storage address of the server entity 40. Another step S30 of the method comprises storing, at the server entity 40, the first itemized card event information 2a based on the storage address indicated by the address information 3. A step S40 of the method comprises providing, by the server entity 40, the first itemized card event information 2a to the user 10 of the card 20.

## Claims

1. A system (1) for providing itemized card event information (2, 2a, 2b) to a user (10), comprising:
a server entity (40) configured to receive a first itemized card event information (2a) from a first card transaction entity (31), the first itemized card event information (2a) being associated to a first card-based transaction process executed via the first card transaction entity (31) based on a card (20) of the user (10);
wherein the server entity (40) is configured to receive an address information (3) from the first card transaction entity (31), the address information (3) being associated to the card (20) of the user (10) and indicating a storage address of the server entity (40);
wherein the server entity (40) is configured to store the first itemized card event information (2a) using the storage address indicated by the address information (3);
wherein the server entity (40) is configured to provide the first itemized card event information (2a) to the user (10) of the card (20).

2. The system according to claim 1,
wherein the first itemized card event information (2a) comprises a first itemized receipt information for a good purchased via the first card transaction entity (31) and/or a first itemized receipt information for a service purchased via the first card transaction entity (31).

3. The system according to any one of the preceding claims,
wherein the first itemized card event information (2a) comprises at least one of a time of an item purchased, a quantity of items purchased, an amount of an item purchased, a unit price of an item purchased, total costs of an item purchased, taxes paid for an item purchased, a total amount of an item purchased, or a warranty information for an item purchased.

4. The system according to any one of the preceding claims,
wherein the server entity (40) is configured to receive a user selection information from the user (10) of the card (20), the user selection information indicating a modality for providing the first itemized card event information (2a) to the user (10) and/or indicating a selected content of the first itemized card event information (2a) provided by the server entity (40) to the user (10) of the card (20).

5. The system according to any one of the preceding claims,
wherein the address information (3) comprises at least one of an e-mail address or a Uniform Resource Locator (URL) address.

6. The system according to any one of the preceding claims, comprising:
the first card transaction entity (31);
wherein the first card transaction entity (31) comprises a point-of-sale terminal and/or an online transaction platform.

7. The system according to claim 6,
wherein the first card transaction entity (31) is configured to execute the first card-based transaction process before receiving the address information (3) from the card (20) of the user (10); and/or
wherein the first card transaction entity (31) is configured to execute the first card-based transaction process in a first step and to receive the address information (3) in a second step such that the first step and the second step are executed separately.

8. The system according to any one of the preceding claims, comprising,
the card (20) of the user (10);
wherein the card (20) of the user (10) comprises an applet configured to provide the address information (3).

9. The method according to any one of the preceding claims,
wherein the server entity (40) is configured to receive a second itemized card event information (2b) from a second card transaction entity (32), the second itemized card event information (2b) being associated to a second card-based transaction process executed via the second card transaction entity (32) based on the card (20) of the user (10);
wherein the server entity (40) is configured to receive the address information (3) from the second card transaction entity (32), the address information (3) being associated to the card (20) of the user (10) and indicating the storage address of the server entity (40);
wherein the server entity (40) is configured to store the second itemized card event information (2b) using the storage address indicated by the address information (3);
wherein the server entity (40) is configured to provide the second itemized card event information (2b) to the user (10) of the card (20).

10. A method for providing itemized card event information (2, 2a, 2b) to a user (10), comprising:
receiving, at a server entity (40), a first itemized card event information (2a) from a first card transaction entity (31), the first itemized card event information (2a) being associated to a first card-based transaction process executed via the first card transaction entity (31) based on a card (20) of the user (10, S10);
receiving, at the server entity (40), an address information (3) from the first card transaction entity (31), the address information (3) being associated to the card (20) of the user (10) and indicating a storage address of the server entity (40, S20);
storing, at the server entity (40), the first itemized card event information (2a) using the storage address indicated by the address information (3, S30);
providing, by the server entity (40), the first itemized card event information (2a) to the user (10) of the card (20, S40).
